(19) Europäisches Patentamt
European Patent Office
Office européen des brevets

(11) Publication number: **0 536 647 A1**

# (12) EUROPEAN PATENT APPLICATION

(21) Application number: **92116865.4**

(51) Int. Cl.[5]: **G03C 1/485**, G03C 1/83

(22) Date of filing: **02.10.92**

(30) Priority: **11.10.91 JP 292552/91**

(43) Date of publication of application: **14.04.93 Bulletin 93/15**

(84) Designated Contracting States: **DE FR GB IT**

(71) Applicant: **KONICA CORPORATION**
**26-2, Nishishinjuku 1-chome, Shinjuku-ku**
**Tokyo 160(JP)**

(72) Inventor: **Nakamura, Hiroshi, c/o Konica Corporation**
**No. 1, Sakura-machi**
**Hino-shi, Tokyo 191(JP)**
Inventor: **Wakasugi, Yasuhiro, c/o Konica Corporation**
**No. 1, Sakura-machi**
**Hino-shi, Tokyo 191(JP)**

(74) Representative: **Türk, Gille, Hrabal, Leifert**
**Brucknerstrasse 20**
**W-4000 Düsseldorf 13 (DE)**

## (54) Direct positive silver halide photographic materials.

(57) The improved direct positive silver halide photographic material has at least one direct positive silver halide photographic emulsion layer on a base and is characterized by containing the dye compound specified hereinafter. The material has high adaptability for safelight.

EP 0 536 647 A1

## BACKGROUND OF THE INVENTION

This invention relates to a direct positive silver halide photographic material and, more particularly, to a direct positive silver halide photographic material having high adaptability for safelight.

To permit the handling of films under roomlight, they have been given improved adaptability for safelight by adding dyes to filter layers so that the films will not undergo a photochemical reaction at the wavelength of a safelight source. However, no dyes have yet been found that provide direct positive photosensitive materials with satisfactory adaptability for safelight.

## SUMMARY OF THE INVENTION

The present invention has been accomplished under these circumstances and has as an object providing a direct positive silver halide photographic material that has high adaptability for safelight.

The present inventors conducted intensive studies in order to attain the above-described object and they have found that it can be attained by the following direct positive silver halide photogaphic material:

A direct positive silver halide photographic material that has at least one direct positive silver halide photogaphic emulsion layer on a base, characterized by containing a compound represented by the following general formula (I):

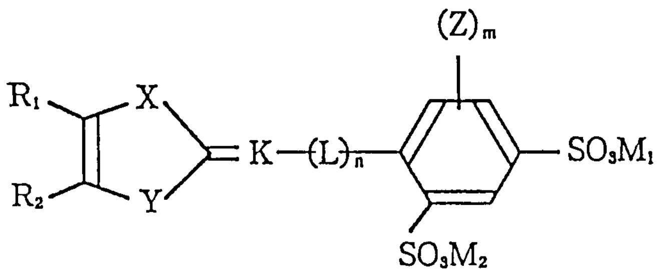

(I)

where $R_1$ and $R_2$ are each a hydrogen atom, a halogen atom (e.g. Cl or Br), an alkylcarbonyl group (e.g. methylcarbonyl or ethylcarbonyl), a hydroxycarbonyl group, an alkoxycarbonyl group (e.g. methoxycarbonyl or ethoxycarbonyl), a sulfonic acid group, an aminosulfonyl group, a substituted or unsubstituted alkyl group (e.g. methyl or ethyl) or an aryl group (e.g. phenyl), provided that $R_1$ and $R_2$ may combine to form a ring (e.g. 5- or 6-membered ring);

X and Y which may be the same or different each represents -O-, -S-, -Se-, -Te-,

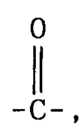

-$SO_2$- or

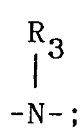

L is -$CH_2CH_2$-,

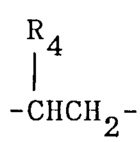 or 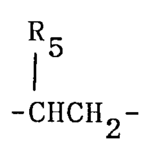

K is =CH- or

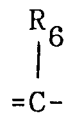

n is an integer of 0 - 6;

Z is a hydroxy group, a mercaptoxy group, a sulfonic acid group, an amino group, a hydroxycarbonyl group, an alkylcarbonyl group (e.g. methylcarbonyl or ethylcarbonyl), a halogen atom (e.g. Cl or Br), an alkoxy group, an alkylthio group (e.g. methylthio), an aminosulfonyl group, a substituted or unsubstituted alkyl group (e.g. methyl or ethyl) or an aryl group (e.g. phenyl);

m is an integer of 0 - 3;

$R_3$, $R_4$, $R_5$ and $R_6$ are each an alkyl group (e.g. methyl or ethyl), an aryl group (e.g. phenyl), an alkoxy group (e.g. methoxy or ethoxy), an alkylthio group (e.g. methylthio), a trialkylsiloxy group (e.g. trimethylsiloxy), a halogen atom (e.g. Cl or Br) or a tertiary amino group; and

$M_1$ and $M_2$ which may be the same or different each represents an alkali metal (e.g. Na or K).

Specific but by no means limiting examples of the compound represented by the general formula (I) are listed below.

Exemplary compounds

1.

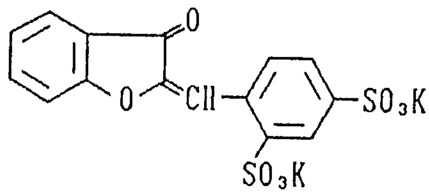

2.

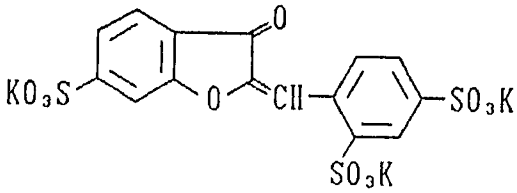

3.

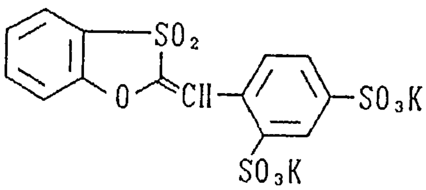

4.

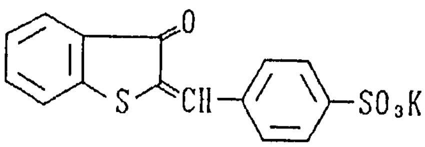

5.

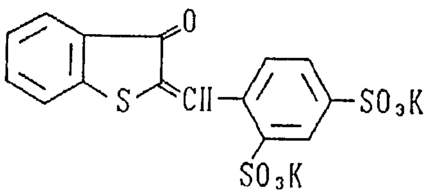

6.

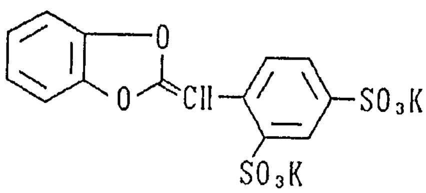

7.

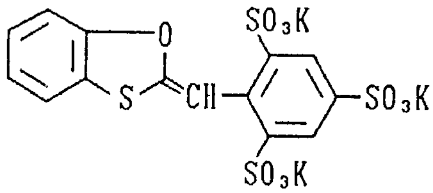

8.

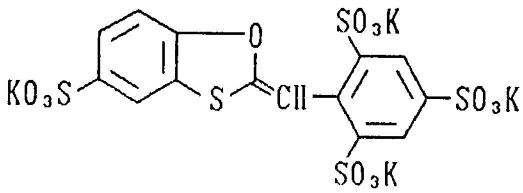

9.

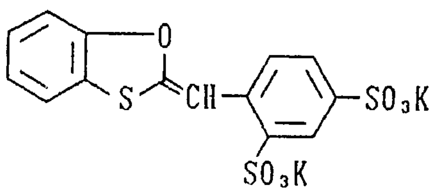

10.

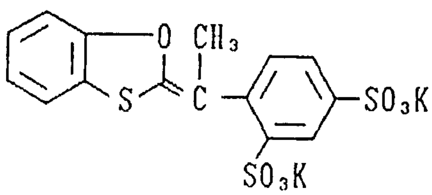

11.

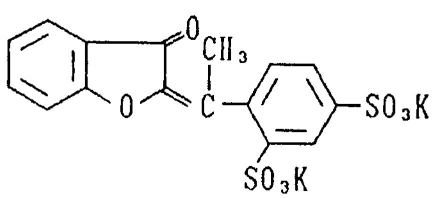

12.

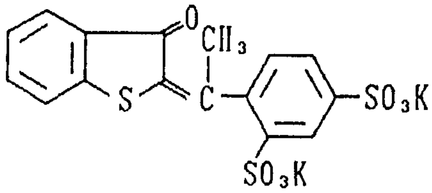

13.

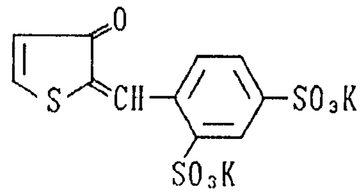

14.

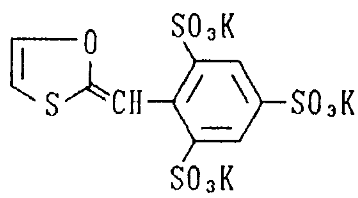

15.

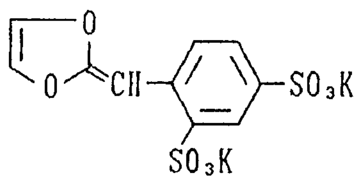

16.

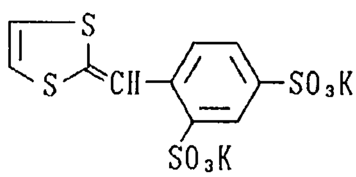

17.

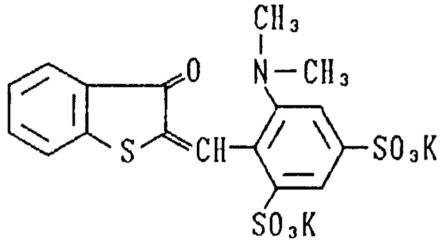

18.

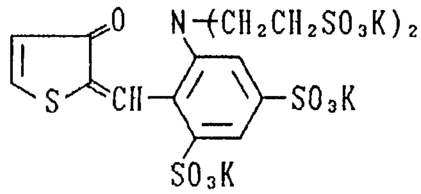

19.

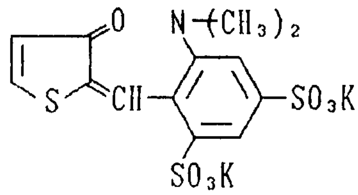

20.

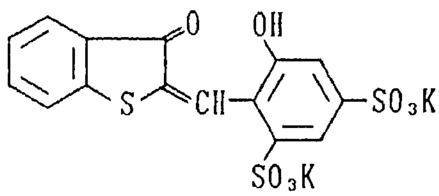

21.

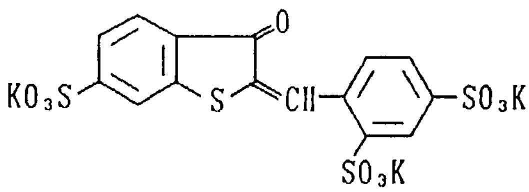

22.

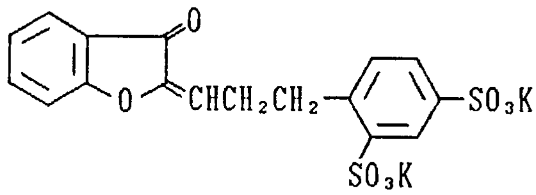

23.

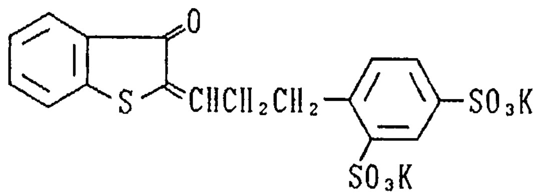

24.

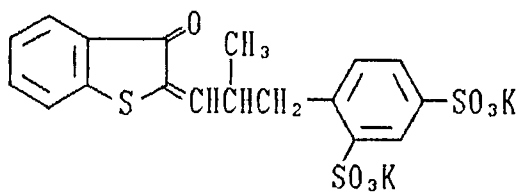

25.

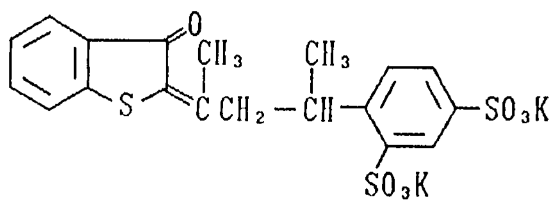

26.

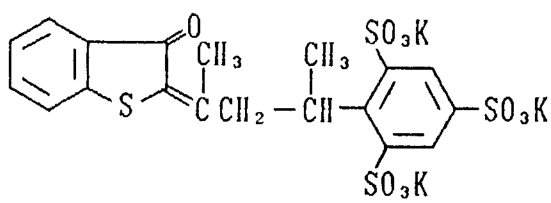

27.

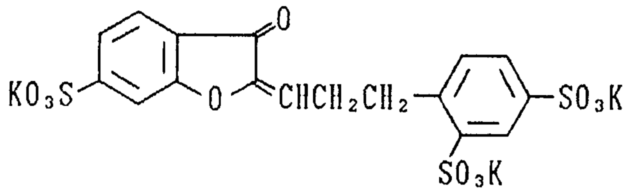

28.

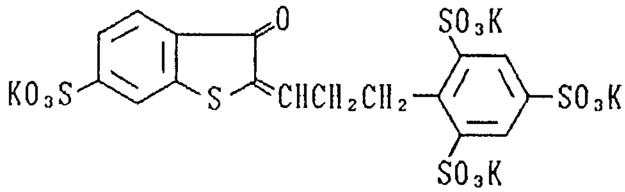

29.

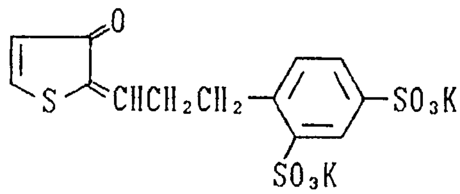

30.

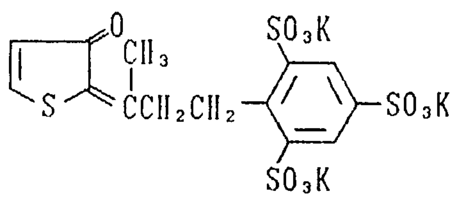

31.

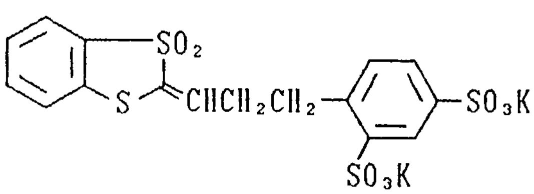

Dyes represented by the general formula (I) may be used either on their own or as admixtures. They may also be combined with known other dyes.

Dyes represented by the general formula (I) may be incorporated in silver halide emulsion layers or in other constituent layers including hydrophilic colloidal layers.

Dyes represented by the general formula (I) are preferably contained in amounts of 1 mg to 2 g, more preferably 5 mg to 1 g, per square meter of the photographic material.

Dyes represented by the general formula (I) may be added to coating solutions for hydrophilic colloidal layers after they are dissolved in suitable solvents such as water, alcohols (e.g. methanol and ethanol), and mixtures thereof.

Those dyes may be mordanted with cationic polymers and any other suitable mordants.

In producing the direct positive silver halide photographic material of the present invention, any known techniques can be applied without any particular limitations in various aspects including the base, layer arrangement and additives. Said material can be processed photographically by various known techniques.

The following examples are provided for the purpose of further illustrating the present invention but are in no way to be taken as limiting.

Example 1

An emulsion was prepared in the following manner.

| Solution (1): | |
|---|---|
| Water | 7.35 L |
| Gelatin | 93.0 g |
| NaCl | 1.83 g |

| Solution (2): | |
|---|---|
| 1 % $Na_3RhCl_6$ | 15.0 ml |
| Gelatin | 50.0 g |
| NaCl | 310 g |
| KBr | 70 g |
| $H_2O$ | to make 1650 ml |

| Solution (3): | |
|---|---|
| $AgNO_3$ | 1.0 kg |
| $H_2O$ | to make 1650 ml |

| Solution (4): | |
|---|---|
| 1/10 N $HNO_3$ | 71 ml |

| Solution (5): | |
|---|---|
| Sodium carbonate | 8.8 g |
| $H_2O$ | to make 660 ml |
| Water | 1600 ml |

Solution (4) was added to solution (1) to adjust the pH to 3.0. Thereafter, solutions (2) and (3) were simultaneously injected into solution (1) over 70 min at 35°C, EAg of 280 mV and pH of 2.0. After 4-min ripening, solution (5) was added and the pH was adjusted to 5.8, followed by desalting in the usual manner to prepare emulsion A.

This emulsion comprised grains having an average size of 0.18 µm.

To emulsion A, thiourea dioxide and chloroauric acid were added in respective amounts of 0.2 mg and 1.0 mg per mole of silver and the mixture was ripened at 65°C for 60 min to cause fogging. Further, 500 mg of 5-nitroindazole, 500 mg of compound a (see below), 10 mg of compound (A) (see below) as a bactericide, 3 g of saponin, 3 g of a styrene-maleic acid co-polymer and 20 g of a polymer latex of butyl acrylate were added, all amounts being based on one mole of silver:

Compound a

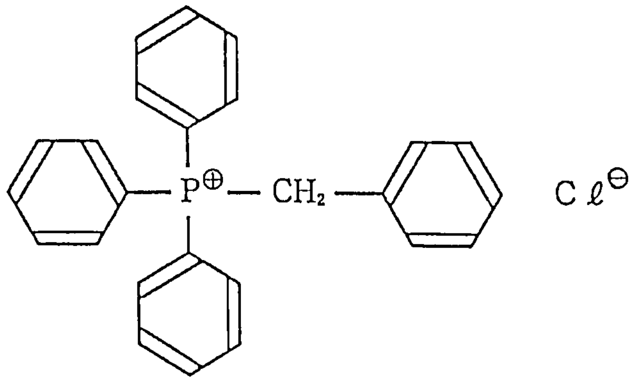

Compound (A)

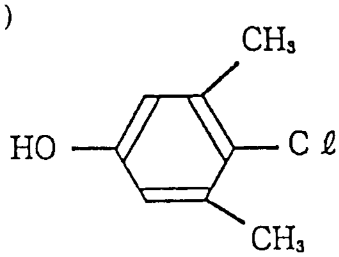

To make a protective film, 4 g of sodium 1-decyl-2-(3-isopentyl)-succinate-2-sulfonate and 2 g of amorphous silica particles having an average size of 5 μm were added and dispersed in an aqueous solution of gelatin (500 g). Then, dyes of the present invention and comparative dyes were added in the amounts shown in Table 1 and the thus prepared coating solutions were applied onto subbed polyethylene terephthalate films (as rendered antistatic by application of a hydrophilic colloidal layer - - see Japanese Patent Application No. 143430/1990) in such a way as to give a silver deposit of 2.8 g/$m^2$ and gelatin contents of 1.5 g/$m^2$ and 0.8 g/$m^2$ in the emulsion and protective layers, respectively.

A backing layer was formed on the opposite side of the base by applying a coating solution that was repared by the following procedure: to an aqueous solution of gelatin (36 g), 1.6 g of (C-1), 1.9 g (C-2), 0.2 g of saponin and 5 g (C-3) were added; then, 2 g of a styrene-maleic acid copolymer was added for viscosity adjustment; further, citric acid was added to effect pH adjustment to 5.4; the reaction product of polyglycerol and epichlorohydrin was added in an amount of 100 mg; and finally, 140 mg of glyoxal was added. The thus prepared coating solution was applied to give a gelatin deposit of 2.0 g/$m^2$ and dried.

At the same time, a backing protective layer was formed by applying a coating solution that was prepared by the following procedure: to an aqueous solution of gelatin (50 g), 340 mg of a sodium salt of a 2-sulfonate-succinic acid bis(2-ethylhexyl)ester, 3 g of sodium chloride, 500 mg of mucochloric acid, 500 mg of spherical polymethyl methacrylate particles (average size: 4 μm) as a matting agent and 1 g of glyoxal were added. The thus prepared coating solution was applied simultaneously with the coating layer for backing layer to give a gelatin deposit of 1.0 g/$m^2$ and dried.

(C－1)

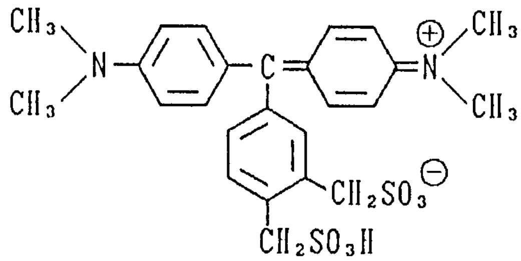

(C－2)

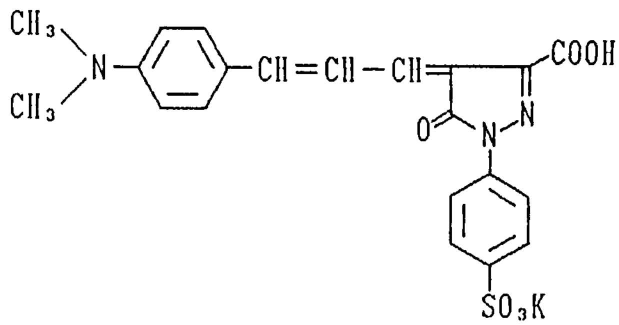

(C－3)

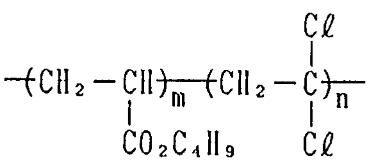

m : n = 1 : 1

Comparative dye (1)

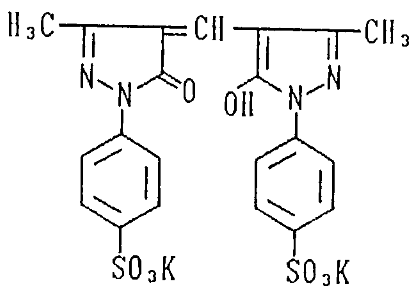

Comparative dye (2)

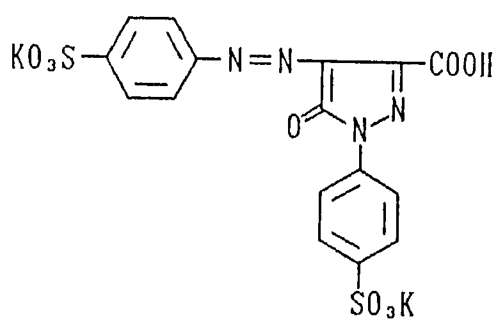

The samples thus prepared were exposed through an optical wedge with FF daylight printer New Type FA-Q of Ushio U-Tec K.K. and thereafter processed with an automatic processor Model GR-26 at 38°C for 20 sec using developer CDM-621 and fixing solution CFL-851, each being a product of Konica Corp. Further, the samples were evaluated for adaptability for safelight and the degree of color remnant. Sensitivity was evaluated in terms of relative values, with the value for sample 7 being taken as 100.

The degree of color remnant was evaluated in 10 levels:

5 - 10 : acceptable level (best at 10)

1 - 4 : unacceptable

Testing adaptability for safelight:

A sample preliminarily subjected to contact exposure in such a way that a halftone document with 50 % dots would be transformed to 55 % dots was exposed to light of 200 lux from a uv cut fluorescent lamp and the time required for the dot percentage to drop by 2 % was measured.

Accelerated aging test:

A thermal treatment was performed on a sample to investigate the effect of aging on its photographic performance. The treatment consisted of heating an unexposed sample at 50 ° C for 3 days to prepare a virtually aged sample.

The results are shown in Table 1.

Table 1

| Sample No. | Dye used | Amount of dye mg/m$^2$ | Time of exposure to safe-light min | Before thermal treatment | | | After thermal treatment | | | Remarks |
|---|---|---|---|---|---|---|---|---|---|---|
| | | | | sensi-tivity | Dmin | Color remnant | sensi-tivity | Dmin | Color remnant | |
| 1 | - | - | 6 | 200 | 0.04 | 10 | 205 | 0.05 | 10 | Comparison |
| 2 | Comparative dye 1 | 100 | 13 | 120 | 0.04 | 7 | 110 | 0.05 | 6 | do. |
| 3 | do. | 500 | 19 | 84 | 0.04 | 7 | 79 | 0.07 | 5 | do. |
| 4 | Comparative dye 2 | 100 | 12 | 150 | 0.07 | 7 | 100 | 0.20 | 5 | do. |
| 5 | do. | 500 | 15 | 120 | 0.11 | 6 | 60 | 0.30 | 4 | do. |
| 6 | Inventive dye 1 | 100 | 17 | 150 | 0.04 | 8 | 145 | 0.05 | 8 | Invention |
| 7 | do. | 500 | 26 | 100 | 0.04 | 8 | 97 | 0.05 | 7 | do. |
| 8 | Inventive dye 5 | 100 | 18 | 160 | 0.04 | 9 | 160 | 0.05 | 8 | do. |
| 9 | do. | 500 | 29 | 100 | 0.04 | 9 | 99 | 0.05 | 8 | do. |
| 10 | Inventive dye 7 | 100 | 19 | 140 | 0.03 | 10 | 135 | 0.04 | 9 | do. |
| 11 | do. | 500 | 26 | 102 | 0.04 | 9 | 98 | 0.05 | 9 | do. |
| 12 | Inventive dye 10 | 100 | 19 | 138 | 0.04 | 9 | 133 | 0.05 | 8 | do. |
| 13 | do. | 500 | 29 | 98 | 0.04 | 8 | 95 | 0.05 | 7 | do. |
| 14 | Inventive dye 13 | 100 | 19 | 140 | 0.04 | 8 | 135 | 0.05 | 7 | do. |
| 15 | do. | 500 | 26 | 99 | 0.04 | 7 | 94 | 0.04 | 6 | do. |
| 16 | Inventive dye 19 | 100 | 17 | 150 | 0.03 | 8 | 148 | 0.04 | 7 | do. |
| 17 | do. | 500 | 26 | 102 | 0.04 | 7 | 100 | 0.05 | 7 | do. |
| 18 | Inventive dye 21 | 100 | 20 | 130 | 0.04 | 9 | 125 | 0.04 | 8 | do. |
| 19 | do. | 500 | 26 | 100 | 0.03 | 8 | 96 | 0.05 | 7 | do. |
| 20 | Inventive dye 23 | 100 | 21 | 125 | 0.04 | 10 | 120 | 0.04 | 9 | do. |
| 21 | do. | 500 | 27 | 98 | 0.04 | 9 | 95 | 0.05 | 8 | do. |

The photographic material provided by the present invention has the following advantages:

(1) It has good spectrum characteristics and, in particular, it absorbs a sufficient amount of safelight to prevent substantial decrease in dot percentage when it is used for making printing plates;

(2) It will decolor during processing and, hence, will undergo only negligible contamination by color remnant after processing; and

(3) It contains a dye that is inert to photographic emulsions.

**Claims**

**1.** A direct positive silver halide photographic material that has at least one direct positive silver halide photographic emulsion layer on a base, characterized by containing a compound represented by the following general formula (I):

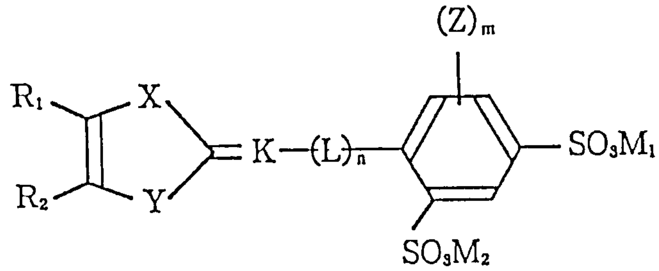

(I)

where $R_1$ and $R_2$ are each a hydrogen atom, a halogen atom, an alkylcarbonyl group, a hydroxycarbonyl group, an alkoxycarbonyl group, a sulfonic acid group, an aminosulfonyl group, a substituted or unsubstituted alkyl group or an aryl group, provided that $R_1$ and $R_2$ may combine to form a ring;

X and Y which may be the same or different each represents -O-, -S-, -Se-, -Te-,

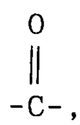

$-SO_2-$ or

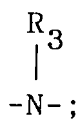

L is $-CH_2CH_2-$,

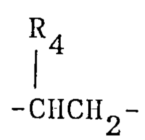

or

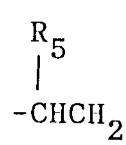

K is =CH- or

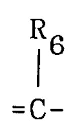

n is an integer of 0 - 6;

Z is a hydroxy group, a mercaptoxy group, a sulfonic acid group, an amino group, a hydroxycarbonyl group, an alkylcarbonyl group, a halogen atom, an alkoxy group, an alkylthio group, an aminosulfonyl group, a substituted or unsubstituted alkyl group or an aryl group;

m is an integer of 0 - 3;

$R_3$, $R_4$, $R_5$ and $R_6$ are each an alkyl group, an aryl group, an alkoxy group, an alkylthio group, a trialkylsiloxy group, a halogen atom or a tertiary amino group; and

$M_1$ and $M_2$ which may be the same or different each represents an alkali metal.

**2.** A direct positive silver halide photographic material according to claim 1 wherein the compound represented by the general formula (I) is contained in amounts of 1 mg to 2 g per square meter of the photogphaphic material.

European Patent Office

# EUROPEAN SEARCH REPORT

Application Number

EP 92 11 6865

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | PATENT ABSTRACTS OF JAPAN vol. 11, no. 103 (P-562)2 April 1987 & JP-A-61 251 843 ( FUJI PHOTO FILM ) 8 November 1986 * abstract * | 1-2 | G03C1/485 G03C1/83 |
| X | PATENT ABSTRACTS OF JAPAN vol. 15, no. 380 (P-1256)25 September 1991 & JP-A-3 150 558 ( FUJI PHOTO FILM CO. LTD ) 26 June 1991 * abstract * | 1-2 | |
| A | EP-A-0 300 257 (MINNESOTA MINING AND MANUFACTURING COMPANY) 25 January 1989 * whole document * | 1-2 | |
| | | | TECHNICAL FIELDS SEARCHED (Int. Cl.5 ) |
| | | | G03C |

The present search report has been drawn up for all claims

| Place of search | Date of completion of the search | Examiner |
|---|---|---|
| MUNICH | 04 DECEMBER 1992 | GUILLEMOIS F.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)